(19)

Europäisches
Patentamt
European
Patent Office
Office européen
des brevets

(11)  **EP 4 310 797 A1**

(12)  **EUROPEAN PATENT APPLICATION**

(43) Date of publication:
**24.01.2024 Bulletin 2024/04**

(21) Application number: **22186229.5**

(22) Date of filing: **21.07.2022**

(51) International Patent Classification (IPC):
***G06V 20/58*** (2022.01)        ***G06T 11/20*** (2006.01)

(52) Cooperative Patent Classification (CPC):
**G06V 20/58; B60W 50/14; G06T 11/203**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Aptiv Technologies Limited
St. Michael (BB)**

(72) Inventors:
• **SZLACHETKA, Marek Jacek
32-440 Sulkowice (PL)**
• **BORKOWSKI, Dariusz
30-689 Krakow (PL)**

(74) Representative: **Bardehle Pagenberg
Partnerschaft mbB
Patentanwälte Rechtsanwälte
Prinzregentenplatz 7
81675 München (DE)**

(54)  **METHOD FOR DETERMINATION OF A FREE SPACE BOUNDARY OF A PHYSICAL ENVIRONMENT IN A VEHICLE ASSISTANCE SYSTEM**

(57)    The present disclosure relates to a computer-implemented method, apparatus, computer program and a vehicle comprising the apparatus for determining in a vehicle assistance system a free space boundary of a physical environment surrounding the vehicle. The method comprises the steps of: a. obtaining a parametric curve approximating spatial information representing the free space boundary, wherein the parametric curve is defined by a plurality of control points; b. determining a shape complexity indicator for a control point of the plurality of control points, the shape complexity indicator indicating a shape complexity of a section of the parametric curve affected by the control point; and c. modifying the section of the parametric curve affected by the control point based on the shape complexity indicator.

Fig. 5

**Description**

**Field of the invention**

The present disclosure relates to a computer-implemented method, an apparatus and a computer program for determining a free space boundary of a physical environment surrounding a vehicle in a vehicle assistance system. In addition, the present disclosure relates to a vehicle comprising the aforementioned apparatus.

**Background**

Nowadays, vehicles (cars, robots, fork-lift trucks, ships etc.) are oftentimes operated by vehicle assistance systems (e.g., by Advanced Driving Assistance Systems (ADAS)) to provide some degree of driving assistance to their driver. However, a vehicle assistance system may also be able to control a vehicle semi-autonomously or even fully autonomously. This requires that the vehicle assistance system of a vehicle has sufficient knowledge of its surroundings to be aware of impassible regions, like walls, obstacles, other vehicles etc. to be able to avoid collisions and allowing the vehicle to navigate safely through its surrounding environment. To be able to reliably distinguish between impassible regions and free space, a model must be provided describing the free space and the impassible regions surrounding a vehicle. Hence, modeling and estimating the current local environment by processing sensor measurement data is essential for a vehicle assistance system.

A commonly used type of model, as for example described by S. Steyer, G. Tanzmeister and D. Wollherr, "Grid-Based Environment Estimation Using Evidential Mapping and Particle Tracking" in IEEE Transactions on Intelligent Vehicles, vol. 3, no. 3, pp. 384-396, Sept. 2018, is a grid-based representation of the environment derived from processing data provided by sensors, for example ranging or odometry sensors, of the vehicle. However, due to the large number of grid cells required for representing the local environment, calculations performed on such models require lots of computational resources, which are typically limited in a vehicle assistance system embedded in a vehicle. In addition, storing grid-based models requires a large amount of memory. In addition, if models or parts of models are shared between vehicles, a large amount of data has to be communicated, e.g., by means of a Vehicle-to-Vehicle (V2V) communication interface.

In order to overcome these drawbacks, methods known in the art suggest altering the grid itself by compression techniques. An Example is the well-known quadtree-based approach utilized in G. Kraetzschmar, G. P. Gassull, and K. Uhl, "Probabilistic Quadtreesfor Variable-Resolution Mapping of Large Environments," in Proc. Of the 5th IFAC/EURON Symposium on Intelligent Autonomous Vehicles, Lisbon, Portugal, jul 2004 for 2D grids.

Another known approach is to encode the information contained in the grid in a parametric form, which reduces the required storage even further. By now, however, only function-specific information such as road boundaries, for example suggested by M. Darms, M. Komar, and S. Lüke, "Map based Road Boundary Estimation", in Proc. of the IEEE Intelligent Vehicles Symposium, San Diego, California, USA,jun 2010, or moving objects, as suggested in T.-N. Nguyen, M.-M. Meinecke, M. Tornow, and B. Michaelis, "Optimized Grid-Based Environment Perception in Advanced Driver Assistance Systems", in Proc. of the IEEE Intelligent Vehicles Symposium, Xi'an, Shaanxi, China, jun 2009, pp. 425-430, have been extracted from grids and represented in a compact, parametric way.

To provide a function-independent, generic map representation, M. Schreier, V. Willert and J. Adamy, "From grid maps to Parametric Free Space maps - A highly compact, generic environment representation for ADAS", 2013 IEEE Intelligent Vehicles Symposium (IV), 2013, pp. 938-944, proposes a highly compact, generic representation of a driving environment, which is called Parametric Free Space (PFS) map, wherein free space represents the passable space for a vehicle. A PFS map is a continuous, bird's-eye view 2D representation of the local, static environment around a vehicle. Such PFS maps do not model the world by discrete grid cells but describe the free space via a flexible and closed curve in a parametric form. The proposed algorithm generates an occupancy grid based on sensor data and a corresponding image analysis. Outer occupancy boundaries of the grid serve as a measurement vector for a recursive estimation of control points of a closed B-spline curve. The spline is tracked and updated over time according to new environment measurements. A fixed number of spline control points is suggested with the control points being equidistantly distributed along the spline. As a result, even complex static environments may be modelled sufficiently precise while reducing the amount of required storage compared to a grid-based representation.

However, due to the fixed number of spline control points, which are equally distributed along the entire spline (e.g., in S-domain of the spline), leads to a number of control points not matching local complexity of a boundary shape. In other words, too many control points may be used at positions where the shape of the boundary has very low curvature, and too few control points are used where the shape of the boundary is locally complex. Hence, the resulting spline may not adequately match the boundary of the free space. Moreover, an unnecessary large number of control points may be used.

In Yang et al.: "Control Point Adjustment for B-Spline Curve Approximation", Computer-Aided Design 36 (2004) 639-652, an approach for control point adjustment for a B-Spline Curve approximation is presented. This approach is based on a reference curve for local complexity determination in order to increase the accuracy of the approximation. However, for unknown/changing environments, as it is the case for most vehicle assistance systems, no reference curve is available.

Against this background, there is a need for a method in a vehicle assistance system for determining a free space boundary of a physical environment, which reduces the computational resources required for processing a parametric curve representing the free space boundary, while at least preserving the shape and approximation quality with respect to the real-world free space boundary.

## Summary of the invention

The above-mentioned problem is at least partly solved by a computer-implemented method according to aspect 1, by an apparatus according to aspect 20, by a computer program according to aspect 21, and by a vehicle according to aspect 22.

A 1st aspect of the present invention refers to a computer-implemented method in a vehicle assistance system for determining a free space boundary of a physical environment surrounding a vehicle. The method comprising the steps of: a. obtaining a parametric curve approximating spatial information representing the free space boundary, wherein the parametric curve is defined by a plurality of control points; b. determining a shape complexity indicator for a control point of the plurality of control points, the shape complexity indicator indicating a shape complexity of a section of the parametric curve affected by the control point; and c. modifying the section of the parametric curve affected by the control point based on the shape complexity indicator.

Modifying the section of the parametric curve affected by the control point based on the shape complexity indicator may result in a parametric curve that better reflects the physical environment and thus the free space boundary. Increasing the approximation quality of the free space boundary may enable the vehicle to move around in the free space safer and more efficiently. The vehicle may be a car, a robot, a ship, an airplane or any other suitable locomotion device. A vehicle assistance system may be a semi- or fully autonomous driving system, an advanced driver assistance system (ADAS) or any other suitable assistance system usable for at least partly affecting control of the vehicle.

According to a 2nd aspect in the 1st aspect, modifying the section of the parametric curve affected by the control point comprises at least one of: increasing an amount of control points in the section of the parametric curve affected by the control point if the shape complexity indicator indicates a high shape complexity; decreasing the amount of control points in the section of the parametric curve affected by the control point if the shape complexity indicator indicates a low shape complexity.

Increasing the amount of control points in a section having a high shape complexity may increase the approximation quality while decreasing the amount of control points in a section having a low shape complexity may reduce the computational resources for processing and/or storing the parametric curve.

According to a 3rd aspect in the 2nd aspect, increasing the amount of control points comprises at least one of: adding a new control point in the section of the parametric curve affected by the control point; moving a control point of the plurality of control points from another section of the parametric curve to the section of the parametric curve affected by the control point; and/or wherein decreasing the amount of control points comprises at least one of: removing the control point from the plurality of control points; moving the control point from the section of the parametric curve to another section of the parametric curve; merging the control point with another control point of the plurality of control points within the section of the parametric curve.

According to a 4th aspect in the 3rd aspect, adding the control point further comprises: adding the new control point between the control point and an adjacent control point.

To improve the approximation quality, adding, removing, moving the control point or merging control points may allow adjusting the parametric curve such that control points may only be placed where necessary to adequately describe the free space boundary of the environment. By adding control points, sections of the parametric curve with a high complexity may be optimized to essentially match the shape of the free space boundary. By removing or merging control points that are not required to achieve a good approximation quality, memory and bandwidth necessary for storing and transmitting the parametric curve to other vehicles may be decreased. Moving (i.e., directly changing the coordinates of a control point and thud re-positioning the control point) may increase the efficiency of the method as a removal and addition of a new control point may be avoided.

According to a 5th aspect in any one of the 3rd to 4th aspects, the step of adding a new control point comprises adding the control point directly between the control point and the successor control point, or adding information associated with the new control point to an addition list; and/or wherein the step of removing the first control point comprises directly removing the first control point, or adding the first control point to a removal list.

A new control point may be added directly between the two control points, i.e., after determining that the new control point is to be added. Adding the new control point directly may have the advantage of increasing the degree of freedom of the curve in this area, which may result in an increase of approximation quality. Adding information associated with the new control point to an addition list may decrease complexity due to unchanged indexes until one iteration over the entire plurality of control points is finished. Accordingly, after such an entire iteration, new control points will be added according to the adding information included in the addition list. This may result in a decrease of execution duration and required computation resources. The same reasoning applies to the aspect of directly removing control points or adding them to a removal list. However, directly removing a control point may immediately decrease memory consumption.

According to a 6th aspect in any one of the 1st to 5th aspect, determining the shape complexity indicator for the control point according to step b. comprises at least one of: determining a distance complexity indicator comprising determining a control point distance between the control point and a successor control point; determining a footpoint complexity indicator comprising determining a footpoint corresponding to the control point, and determining a footpoint distance between the footpoint and the control point; determining an angle complexity indicator comprising determining an angle between the control point, the successor control point and a predecessor control point.

Considering at least one aspect (e.g., the distance complexity, footpoint complexity and/or angle complexity) when determining the complexity of the section of the parametric curve affected by the control point increases the accuracy of the determined shape complexity indicator. Accordingly, a more sophisticated decision on how to modify the section of the parametric curve affected by the control point based on the shape complexity indicator can be made, which may result in a higher approximation quality or less memory consumption, since some control points that are not required for representing the free space boundary may be removed.

According to a 7th aspect in the 6th aspect, determining the distance complexity indicator further comprises: setting the distance complexity indicator to a value according to a lower distance complexity bound if the control point distance is lower than or equal to a lower distance limit, wherein the value according to the lower distance complexity bound indicates a lowest distance shape complexity; setting the distance complexity indicator to a value according to an upper distance complexity bound if the control point distance is greater than or equal to an upper distance limit, wherein the value according to the upper distance complexity bound indicates a highest distance shape complexity; setting the distance complexity indicator to a value lying between the upper distance complexity bound and the lower distance complexity bound if the control point distance is greater than the lower distance limit and smaller than the upper distance limit, wherein the value lying between the upper distance complexity bound and the lower distance complexity bound indicates an intermediate distance shape complexity.

Providing the above-described rules for determining the distance complexity indicator may allow an accurate mapping of distance values to complexity values for the distance complexity indicator. Accordingly, the indicator may precisely indicate the complexity introduced by the distance between control points. Accordingly, a more sophisticated decision on how to modify the section of the parametric curve affected by the control point based on the shape complexity indicator can be made, which may result in a higher approximation quality or less memory required.

According to an 8th aspect in the 6th to 7th aspect, determining the footpoint complexity indicator further comprises: setting the footpoint complexity indicator to a value according to a lower footpoint distance complexity bound if the footpoint distance is lower than or equal to a lower footpoint distance limit, wherein the value according to the lower footpoint distance complexity bound indicates a lowest footpoint shape complexity; setting the footpoint complexity indicator to a value according to an upper footpoint distance complexity bound if the footpoint distance is greater than or equal to an upper footpoint distance limit, wherein the value according to the upper footpoint distance complexity bound indicates a highest footpoint shape complexity; setting the footpoint complexity indicator to a value lying between the upper footpoint distance complexity bound and the lower footpoint distance complexity bound if the footpoint distance is greater than the lower footpoint distance limit and smaller than the upper footpoint distance limit, wherein the value lying between the upper footpoint distance complexity bound and the lower footpoint distance complexity bound indicates an intermediate footpoint shape complexity.

Providing the above-described rules for determining the footpoint complexity indicator may allow for an accurate mapping of footpoint distance values to complexity values for the footpoint complexity indicator. Accordingly, the indicator may be able to precisely indicate the complexity introduced by the footpoint distance. Accordingly, a more sophisticated decision on how to modify the section of the parametric curve affected by the control point based on the shape complexity indicator can be made, which may result in a higher approximation quality or less memory required.

According to a 9th aspect in any one of the 6th to 8th aspect, determining the angle complexity indicator further comprises: setting the angle complexity indicator to a value according to a lower angle complexity bound if the angle is lower than or equal to a lower angle limit, wherein the value according to the lower angle complexity bound indicates a lowest angle shape complexity; setting the angle complexity indicator to a value according to an upper angle complexity bound if the angle is greater than or equal to an upper angle limit, wherein the value according to the upper angle complexity bound indicates a highest angle shape complexity; setting the angle complexity indicator to a value lying between the upper angle complexity bound and the lower angle complexity bound if the angle is greater than the lower angle limit and smaller than the upper angle limit, wherein the value lying between the upper angle complexity bound and the lower angle complexity bound indicates an intermediate angle shape complexity.

Providing the above-described rules for determining the angle complexity indicator may allow for an accurate mapping of angle values to complexity values for the angle complexity indicator. Accordingly, the indicator may precisely indicate the complexity introduced by the angle between control points. Accordingly, a more sophisticated decision on how to modify the section of the parametric curve affected by the control point based on the shape complexity indicator can be made, which may result in a higher approximation quality or less memory required.

According to a 10th aspect in any one of the 6th to 9th aspect, determining the footpoint corresponding to the control point comprises: determining a S-domain value of the control point; determining a longitudinal value of the footpoint in a longitudinal 1D representation of the parametric curve based on the S-domain value of the control point; determining a lateral value of the footpoint in a lateral 1D representation of the parametric curve based on the S-domain value of the control point; setting the footpoint at a location on the parametric curve according to the longitudinal value and the lateral value.

Providing a way of precisely determining the position (i.e., the coordinates) of the footpoint may provide an increased accuracy in determining the footpoint distance. As a result, the accuracy of the corresponding footpoint complexity may be increased, too.

According to an 11th aspect in any one of the 6thnd to 10th aspect, determining the shape complexity further comprises the steps of: calculating a function value based on the distance complexity indicator, the footpoint complexity indicator and/or the angle complexity indicator; mapping the function value to a value range having a lower complexity bound and an upper complexity bound; wherein the lower complexity bound is preferably -1 and the upper complexity bound is preferably 1.

Providing the above-described rules for determining the shape complexity indicator may allow for an accurate merging and mapping of the single values of the corresponding angle, distance and/or footpoint distance complexity indicators. Accordingly, the shape indicator may precisely indicate the overall complexity of the section of the parametric curve affected by the control point. Accordingly, a more sophisticated decision on how to modify the section of the parametric curve affected by the control point based on the shape complexity indicator can be made, which may result in a higher approximation quality or less memory required.

According to a 12th aspect in any one of the 1st to 11th aspect, the method comprises: repeating, for each control point of the plurality of control points, steps b. and c.

Iterating over the entirety of control points of the plurality of control points and evaluating whether the section of the parametric curve affected by the corresponding control point has to be modified may increase the approximation quality and/or decreases the memory consumption for storing the parametric curve representation.

According to a 13th aspect in any one of the preceding aspects, the method further comprises: determining, prior to step b., a status indicator based on measurement data, indicating whether the control point is required for defining the parametric curve to represent the free space boundary; and removing the control point and skipping steps b. and c. if the status indicator indicates that the control point is not required; or maintaining the control point.

Providing an additional status indicator for the control point may result in an increased execution efficiency of the parametric curve approximation. This is because the status indicator provides additional context information regarding the control point. The status indicator may indicate whether the control point is to be removed or maintained based on a state of the control point. Measurement data may include a newly received measurement point, a measured time since the last state update or information related to the control point's position (e.g., a distance between the control point and the vehicle or the control point lying outside of a predefined area surrounding the vehicle).

According to 14th aspects in the 13th aspects, the step of determining the status indicator for the control point of the plurality of control points comprises: receiving a measurement point from a sensor of the vehicle; determining whether the measurement point lies within a parametric curve support interval associated with the control point; if it is determined that the measurement point lies within the parametric curve support interval, setting the status indicator to indicate that the control point is required; and if it is determined that the measurement point does not lie within the parametric curve support interval, setting the status indicator to indicate that the control point is not required.

According to a 15th aspect in the 14th aspect, setting the status indicator to indicate that the control point is to not required may further depend on determining that a time-since-last-update threshold is exceeded.

Determining whether a control point is affected (i.e., the measurement point lies within the corresponding parametric curve support interval) by a measurement point increases the accuracy of determining the state of the corresponding control point. Accordingly, if the control point is affected, the control point's state may be set to UPDATED, which may result in the status indicator indicating to maintain the point. If not, the control point's state may be set to COASTED, which may result (after exceeding the time-since-last-update threshold) in the status indicator indicating to remove the point.

According to a 16th aspect in any one of the 13th to 15th aspect, the step of determining a status indicator for the control point of the plurality of control points comprises: determining that a distance between the control point and the vehicle is above an out-of-reach threshold; and/or determining that the control point lies outside of a predefined area surrounding the vehicle; and setting the status indicator to indicate that the control point is not required.

This may allow to efficiently determine whether the control point is in the OUT-OF-REACH state. If a control point is in the OUT-OF-REACH state, the control point may be regarded as not required for defining the parametric curve representing the free space boundary. This is because said control point may relate to a region of the physical environment which is no longer relevant for the vehicle assistance system (e.g., in terms of safety or navigation). Accordingly, the status indicator of a control point having the OUT-OF-REACH state may indicate to remove the control point and skip the steps b. and c.

According to a 17th aspects in any one of the 13th to 16th aspect, the method further comprises: repeating, for each control point of the plurality of control points the step of determining a status indicator for the control point of the plurality of control points, the step of removing the control point and skipping steps b. and c. if the status indicator indicates that the control point is not required, and the step of maintaining the control point and executing steps b. and c. if the status indicator indicates that the control point is required.

Determining the status indicator for each control point may increase the execution speed of the presented method. This is because a control point may be removed based on the status indicator before the complexity of the parametric curve section affected by the control point is evaluated. Accordingly, the amount of control points, for which the shape complexity indicator has to be determined, may be reduced.

According to an 18th aspect in any one of the preceding aspects, obtaining the parametric curve according to step a. comprises: determining the parametric curve based on sensor data of at least one sensor of the vehicle; or receiving the parametric curve from a memory, which is operably connected to the vehicle assistance system.

Using sensor data of the vehicle to determine the parametric curve is a reliable source of data, which describes the physical environment of the vehicle. Therefore, a parametric curve determined based on such data may achieve a high approximation quality. In case a corresponding parametric curve was already determined, receiving it from memory may be beneficial instead of re-determining it. Receiving it from memory may save computational resources, e.g., memory.

According to a 19th aspect in any one of the preceding aspects, the method further comprises: determining an operating instruction based on the parametric curve affecting a function of the vehicle assistance system, wherein the function preferably comprises at least one of: displaying the parametric curve on a display of the vehicle; conducting a vehicle path planning; triggering a warning; affecting control of the vehicle during a parking process.

An operating instruction for the vehicle assistance system being determined on the optimized parametric curve may increase system efficiency and safety. As the parametric curve is optimized in terms of memory consumption the corresponding operating instruction may be determined faster. Furthermore, due to the high approximation quality, system/vehicle safety is ensured and increased.

A 20th aspect concerns an apparatus comprising means configured to perform the method as described above.

A 21st aspect concerns a computer program comprising instructions, which when executed by a computer, causing the computer to perform the method as described above.

A 22nd aspect concerns a vehicle comprising the aforementioned apparatus of the 20th aspects.

**Brief description of the drawings**

Further background information, prior art methods and various aspects of the present invention are described in more detail in the following by reference to the accompanying figures without the present invention being limited to the embodiments of these figures.

Fig. 1 illustrates a visualization of parametric curves.

Fig. 2 illustrates longitudinal and lateral components of parametric curves after S-Domain transformation.

Fig. 3 illustrates the approximation of a free space boundary based on 25 control points according to methods known in the art.

Fig. 4 illustrates the approximation of a free space boundary based on 50 control points according to methods known in the art.

Fig. 5 illustrates an overview of the algorithm according to aspects of the present invention.

Fig. 6 illustrates an environment surrounding a vehicle according to aspects of the present invention.

Fig. 7a illustrates lateral components of parametric curves and the corresponding basic functions according to aspects of the present invention.

Fig. 7b illustrates a snapshot of an intersection between supporting intervals and a measurement point according to aspects of the present invention.

Fig. 8 illustrates a shape hypothesis for adapting a distribution of a plurality of control points.

Fig. 9 illustrates a parametric curve produced according to aspects of the present invention.

Fig. 10 illustrates an exemplary way of determining a footpoint corresponding to a control point.

**Detailed description**

In the following, background information, prior art methods and aspects of the present invention are described in more detail.

Algorithm overview

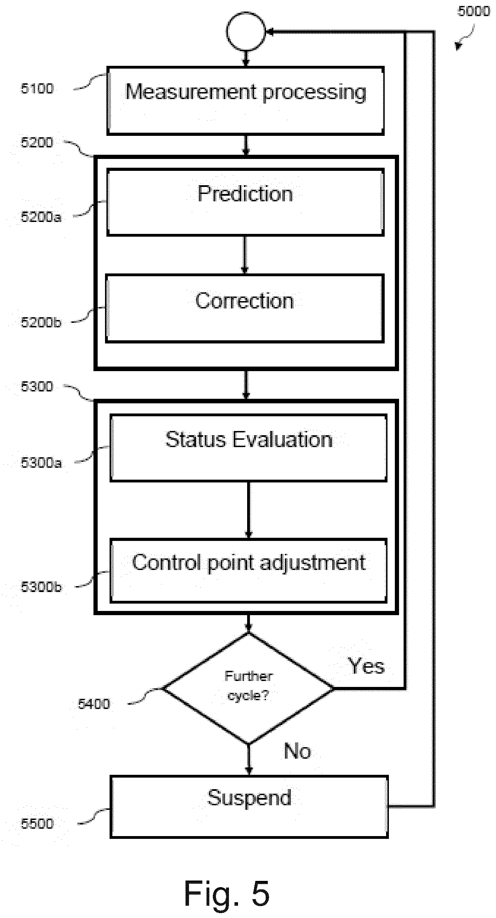

Fig. 5 illustrates an overview of an algorithm 5000 according to aspects of the present invention for preserving or improving the approximation quality of a parametric curve by at the same time reducing (when the approximation quality is preserved) or maintaining (if the approximation quality is improved) the number of control points.

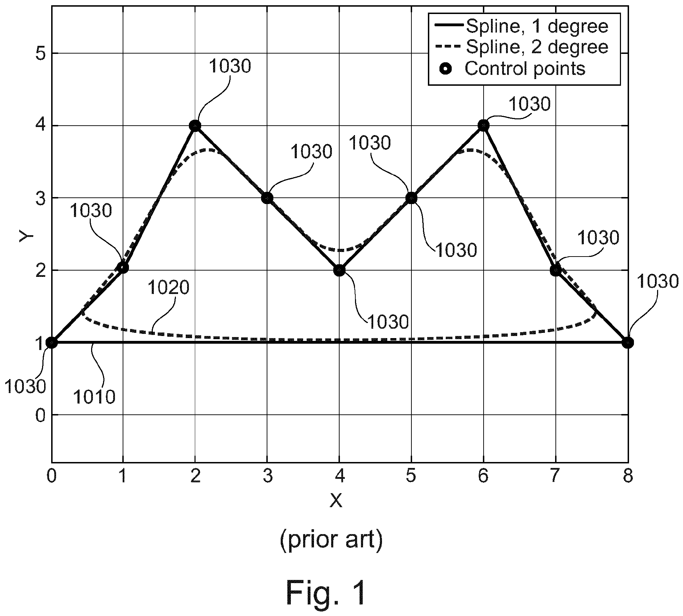

Fig. 1 illustrates a visualization of such a 2D parametric curve, e.g., a B-spline. Parametric curves are piecewise polynomial and are thus of a specific degree. As an example, Fig. 1 depicts a first parametric curve of degree one 1010 illustrated by the solid line and a second parametric curve of degree two 1020 illustrated by the dashed line. Both parametric curves 1010, 1020 are fitted based on a plurality of control points 1030, each having a position in cartesian coordinates. In this example, nine control points are used. As can be seen, the first parametric curve of degree one 1010 connects the control points 1030 by straight lines. By contrast, the second parametric curve of degree two 1020 connects the control points by curved lines and thus approximates the shape of the first parametric curve of degree one 1010 in terms of a curved line.

In step 5100, called "measurement processing", raw measurement data (i.e., sensor data from at least one sensor of the vehicle) is obtained and (pre-)processed so it can be used for the following step. The raw measurement data may comprise measurement points, which may be retrieved by using sensor(s) of the vehicle to sample the free space boundary of the environment. A footpoint corresponding to each measurement may be determined (e.g., by distance minimalization between the measurement point and the footpoint). Said information may be used by a Kalman filter in the following step to estimate the parametric curve.

In step 5200, call "estimation", a parametric curve is obtained. In case there is no existing parametric curve which may otherwise be obtained from memory or be retrieved from another vehicle e.g., by a V2V communication interface, a new parametric curve may be created/predicted in step 5200a by an estimator (e.g., a Kalman filter - prediction step). Predicting the parametric curve may further be based on a host movement compensation (i.e., the movement of the host/vehicle may introduce some uncertainties regarding the positions).After step 5200a (i.e., after a parametric curve is obtained either by receiving an already existing one or by creating a new one), the parametric curve may be corrected in step 5200b based on the processed raw measurement data (e.g., a Kalman filter - correction step).

In step 5300, called "post updates", the parametric curve is updated (i.e., a plurality of control points of the parametric curve is modified).

In step 5300a, called "status evaluation", states of the plurality of control points of the parametric curve are evaluated and updated based for example on the newly received measurement points and their corresponding footpoints. A footpoint is a point that lies on the parametric curve which approximates the free space boundary of an environment. More specifically, in step 5300a, footpoints corresponding to the measurement points are identified which are then used to evaluate and update states of the control points of the part of the parametric curve, which may be affected by the new measurement points.

In step 5300b, called "control point adjustment", control point parameters (e.g., a shape complexity of the parametric curve section affected by the control point) are evaluated in order to reduce or increase the number of control points or adapting their distribution while maintaining or improving the approximation quality of the corresponding parametric curve with respect to a free space boundary or potentially reducing memory consumption.

Afterwards, it is determined in step 5400 whether a further cycle is required, which may depend on different criteria iteration (e.g., for reducing the number of control points and/or improving the approximation quality or adapting the parametric curve to a changed physical environment). If it is determined that a further cycle is required, the algorithm again executes the "measurement processing" according to step 5100. If it is determined that no further cycle is required, the algorithm moves on to step 5500, called "suspend".

In step 5500, called "suspend", the algorithm may remain paused, for example when the vehicle's engine or the vehicle assistance system is turned off. However, when the vehicle's engine or the vehicle assistance system is turned on again, the algorithm may restart execution by moving to step 5100.

Parametric curve estimation

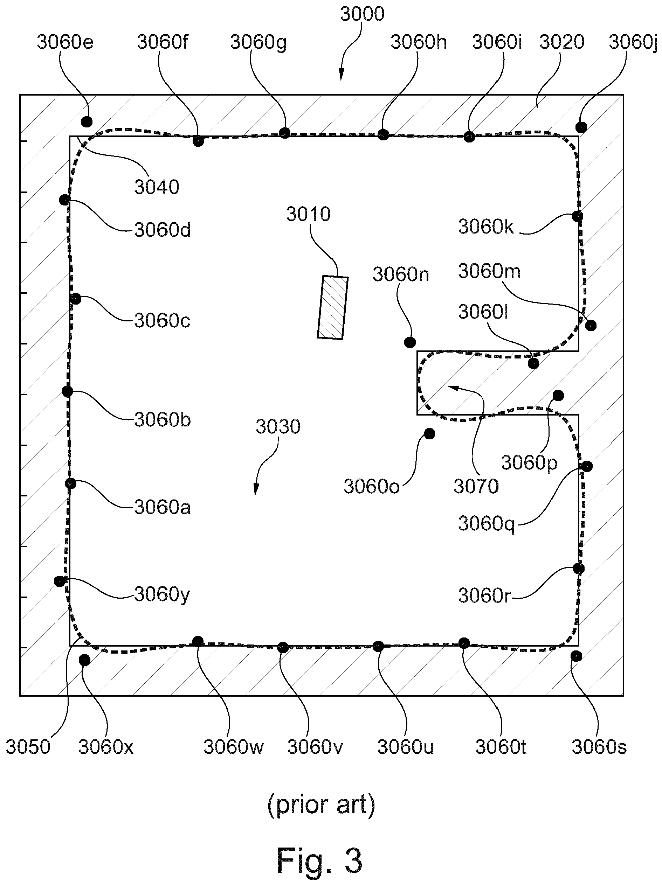

Fig. 3 illustrates an environment 3000 that may surround a vehicle 3010. The environment 3000 in this example comprises an impassible region 3020 (e.g., a wall or other kinds of physical obstacles) forming a corresponding free space 3030 in which the vehicle 3010 may move around. In accordance with the shape of the impassable region 3020, the free space 3030 is described by a free space boundary 3040 (solid line). Free space boundary 3040 is approximated by a parametric curve 3050 (dashed line), which is defined by 25 control points 3060a-y. The control points 3060a-y have been determined and set according to a method known in the art, for example by the method according to M. Schreier, V. Willert and J. Adamy, "From grid maps to Parametric Free Space maps - A highly compact, generic environment representation for ADAS", 2013 IEEE Intelligent Vehicles Symposium (IV), 2013, pp. 938-944. Thus, the control points 3060a-y are equidistantly distributed along parametric curve 1050. Thus, adjacent control points have essentially the same distance from each other.

In general, a parametric curve may either be obtained by determining based on sensor data of at least one sensor of the vehicle. In another example, the parametric curve may be determined based on another data structure as input (e.g., an occupancy grid) which was generated based on the sensor data. Alternatively, the parametric curve may be received from a memory. The parametric curve may be determined based on the sensor data in cases where the assistance system of the vehicle is turned on or when the vehicle's environment changes (e.g., when the vehicle moves). In these cases, it may be necessary to determine the parametric curve before modifying (i.e., optimizing) the distribution of the plurality of control points of the parametric curve. In cases where the parametric curve has already been determined and no (re-)determining is necessary (for the moment), the already determined parametric curve, which may be saved into the memory of the vehicle, may be received from the memory. This may be reasonable in situations where the environment of the vehicle does not change or when a parametric curve has been determined based on the current environment of the vehicle and saved into memory before being further optimized.

Generating the parametric curve based on sensor data of the vehicle may allow for a precise modelling of the environment (e.g., the physical environment surrounding the vehicle). Accordingly, the resulting parametric curve may achieve a high approximation quality of the actual free space boundary.

The parametric curve may be fitted based on a parametric curve configuration including a parametric curve degree and/or the plurality of control points (i.e., the amount of control points initially selected for spanning the parametric curve) allows flexibly adjusting the parametric curve (e.g., the parametric curve's shape) to requirements defined by the changing environment of the vehicle. In general, a parametric curve may be any suitable parametric curve which is described by a plurality of (control)points such as a $n^{th}$ degree spline, B-spline, cubic spline or non-uniform rational B-spline (NURBS).

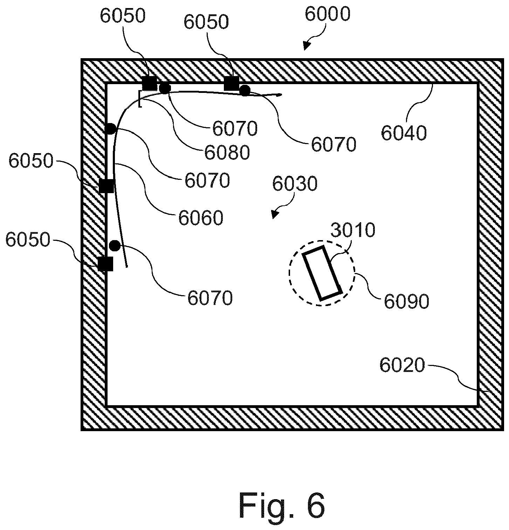

In the following, step 5200 is further described based on Fig. 6, which illustrates an environment 6000 that may surround vehicle 3010. The environment 6000 in this example comprises an impassible region 6020 (e.g., a wall) in square-shape and thus forms a free space 6030 which is also square shaped and in which the vehicle 3010 may move around. The free space 6030 is represented by a square-shaped free space boundary 6040.

A parametric curve 6060 (only shown in extracts in Fig. 6) and/or its corresponding control points 6070 may be retrieved from a memory. This could be the case if vehicle 3010 has already passed environment 6000 at a previous point in time and may have stored the corresponding parametric curve 6060 in memory for further usage. In addition, it is also possible that vehicle 3010 has retrieved parametric curve 6060 and/or the corresponding control points 6070 from another vehicle that previously passed environment 6000, e.g., by means of a V2V communication interface.

However, in step 5200a, the generation of a parametric curve 6060 may also begin from scratch. In this case, the free space boundary 6040 may be determined by measurement points 6050 located on free space boundary 6040 and indicated by black squares, which may be obtained by sensors of the vehicle 3010, like ranging or odometry sensors. In the example of Fig. 6, for simplicity, only four measurement points 6050 are illustrated. However, to adequately define the shape of the free space boundary 6040, more than four measurement points 6050 may be required. The measurement points 6050 may be mapped onto a cartesian coordinate system according to environment 6000. An initial parametric curve 6090 (indicated by the dashed circle) surrounding vehicle 3010, preferably having a circular shape, may be used as starting point. Then, according to the measurement points 6070, the shape of parametric curve 6060 may be extended to approximate the shape of free space boundary 6040, i.e., the control points 6070 to which parametric curve 6060 is fitted, are set accordingly. Independent of whether parametric curve 6060 has been retrieved from memory or has been generated from scratch, the parametric curve 6060 is corrected in step 5200b based on the processed measurement data. During operation of the vehicle 3010, the measurement points 6050 (indicated by the black squares) may be updated, i.e., new measurement points 6050 may be obtained from sensors of the vehicle and added to the free space boundary 6040, or measurement points 6050 may be dynamically removed due to movement of the vehicle 3010. Hence, measurement points 6050 may be updated over time, both when the environment 6000 dynamically changes due to movement of the vehicle 3010 and when the environment 6000 remains constant due to non-movement of the vehicle 3010.

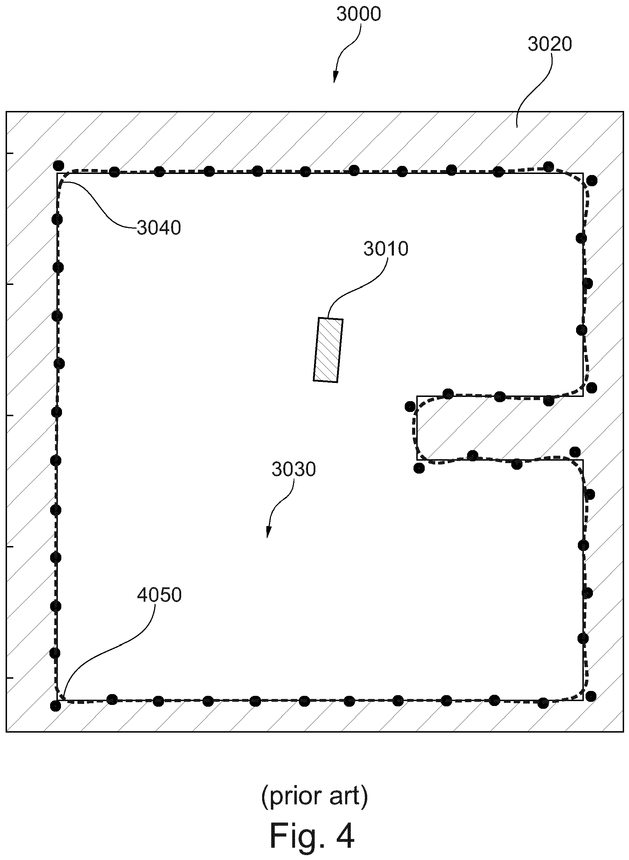

At the end of step 5200, parametric curve 6060 essentially corresponds to a parametric curve 3050, 4050 as described with respect to Figs. 3 and 4 and thus comprises a relatively large amount of control points, wherein the distance of adjacent control points 6070 is essentially the same. Then, algorithm 5000 moves on to step 5300.

Post updates

As can be seen in Fig. 3, the parametric curve 3050 does not correspond exactly to the free space boundary 3040 and thus only inaccurately approximates the shape of free space boundary 3040. For example, in the upper left corner, the part of parametric curve 3050, which extents between the control points 3060d and 3060f, recognizably deviates from the rectangular corner of the free space boundary 3040. Parametric curve 3050 even stronger deviates from the shape of free space boundary 3040 when the complexity of the shape of free space boundary 3040 increases. This can be seen on the right side of Fig. 3 where free space boundary 3040 has an inward indentation 3070. In this area, the part of parametric curve 3050, which extents between control points 3060l and 3060q, significantly deviates from the corresponding part of the shape of free space boundary 3040.

To improve approximation quality, methods known in the art, for example the method according to M. Schreier, V. Willert and J. Adamy, "From grid maps to Parametric Free Space maps - A highly compact, generic environment representation for ADAS", 2013 IEEE Intelligent Vehicles Symposium (IV), 2013, pp. 938-944, simply increase the number of equidistantly distributed control points, as illustrated in Fig. 4. Here, the number of control points (indicated by the black circles) has been increased to 50. As can be seen, compared to parametric curve 3050 according to Fig. 3, parametric curve 4050 fitted to the 50 control points much better approximates free space boundary 3040. In other words, the shape of parametric curve 4050 comes much closer to the shape of free space boundary 3040 and thus provides an improved approximation quality.

However, the approach of simply increasing the number of control points has at least two drawbacks. First of all, increasing the number of control points increases the amount of memory for storing the control points and thus for storing parametric curve 4050. Hence, if vehicles 3010 communicate such a parametric curve among each other (e.g., by a V2V communication interface), a higher communication bandwidth is required. In addition, processing a parametric curve based on an increased number of control points becomes more complex, slowing down the corresponding process. In general, one can see that using a fixed (i.e., hard coded) number may either result in having too many control points, specifically in situations where the environment may be sufficiently approximated with less control points, or may result in having too few control points in situations where the environment may not be sufficiently approximated with the fixed number of control points. In addition, having too many unnecessary control points in a section of the parametric curve may result in oscillatory behavior of the parametric curve (e.g., overshooting or high dynamics) which may decrease the approximation quality.

To overcome the above-mentioned drawbacks at least in part, the disclosed algorithm for preserving the approximation quality of a parametric curve is described that requires less control points compared to prior art methods. In addition, if the number of control points is not reduced, the algorithm may lead to an increased approximation quality.

Therefore, in step 5300, the parametric curve is updated according to identified optimization potential. This may either be based on the result of the status evaluation of step 5300a and/or the control point adjustment of step 5300b.

Status evaluation

A control point may be associated with at least one state of a plurality of states (e.g., UPDATED, COASTED, NEW, OUT-OF-REACH). The UPDATED state may signal that the control point has been updated lately, i.e., a position of the control point has been verified by a corresponding measurement point from a sensor of the vehicle. Accordingly, the status indicator of a control point having the UPDATED state may indicate to maintain the control point and continue with executing the steps b. and c.

The COASTED state may signal that the control point has not been updated lately, i.e., the position of the control point has not been verified by a corresponding measurement (e.g., within a defined timespan). A time-since-last-update threshold may be defined describing a duration/timespan in which the state of a control point is allowed to not be updated (i.e., the state of the control point stays COASTED). The time-since-last-update threshold may for example be defined as a duration in time units (e.g., milliseconds etc.) or be defined as a number of cycles, each cycle having a corresponding execution duration in time units. In the latter, a cycle refers to an execution of determining whether the control point is affected by a measurement point (i.e., the measurement point lies within the corresponding support interval) or not. Accordingly, if the last state update of the control point exceeds the time-since-last-update threshold (i.e., the control point is in the COASTED state for too long), the status indicator of the control point may indicate to remove the control point and skip the steps b. and c.

The NEW state may signal that the control point has been added (e.g., as a result of executing step c.) to the plurality of control points of the parametric curve lately, i.e., within a defined timespan. Accordingly, the status indicator of a control point having the NEW state may indicate to maintain the control point and continue with executing the steps b. and c. Once the defined timespan in which a state of a control point is defined as NEW, the state of the control point may be changed to COASTED, UPDATED or OUT-OF-REACH respectively.

The OUT-OF-REACH state may signal that the control point is no longer reachable/detectable by the sensors of the vehicle. This may be the case if the distance of the vehicle to the control point is larger than the reach of the sensor (e.g., radar, camera etc.) (i.e., a distance between the control point and the vehicle being above an out-of-reach threshold) or the control point not being within a predefined area of interest surrounding the vehicle (e.g., a polygon) which can be determined by a (combined) field of view of the sensor(s) of the vehicle. Accordingly, the status indicator of a control point having the OUT-OF-REACH state may indicate to remove the control point and skip the steps b. and c.

In addition, a control point's state may be associated with an uncertainty factor. In this context, a high level of uncertainty may describe a situation in which the method is not sure whether a control point is still describing a part of the actual free space boundary of the physical environment or not. The latter may be the case due to measurement inaccuracies of sensors of the vehicle. The uncertainty may be determined based on a covariance matrix describing the state of the control point. Accordingly, the status indicator of a control point may indicate to remove or maintain the control point based on the uncertainty (e.g., removing if the uncertainty is too high etc.).

Providing a wide range of conditions increases the accuracy of determining whether a control point may be removed. Therefore, only control points are kept which are required for maintaining or improving approximation quality. As a result, the efficiency of the free space boundary determination is further increased resulting in an optimized memory consumption since only control points are maintained that are indeed required.

In general, the purpose of the status evaluation step 5300a is to determine a status indicator for each control point of the plurality of control points. The status indicator may indicate whether the control point is to be removed or maintained based on an (evaluated) state of the control point (e.g., COASTED, UPDATED, NEW, OUT-OF-REACH). In this context, evaluation may refer to determining the current state of a control point.

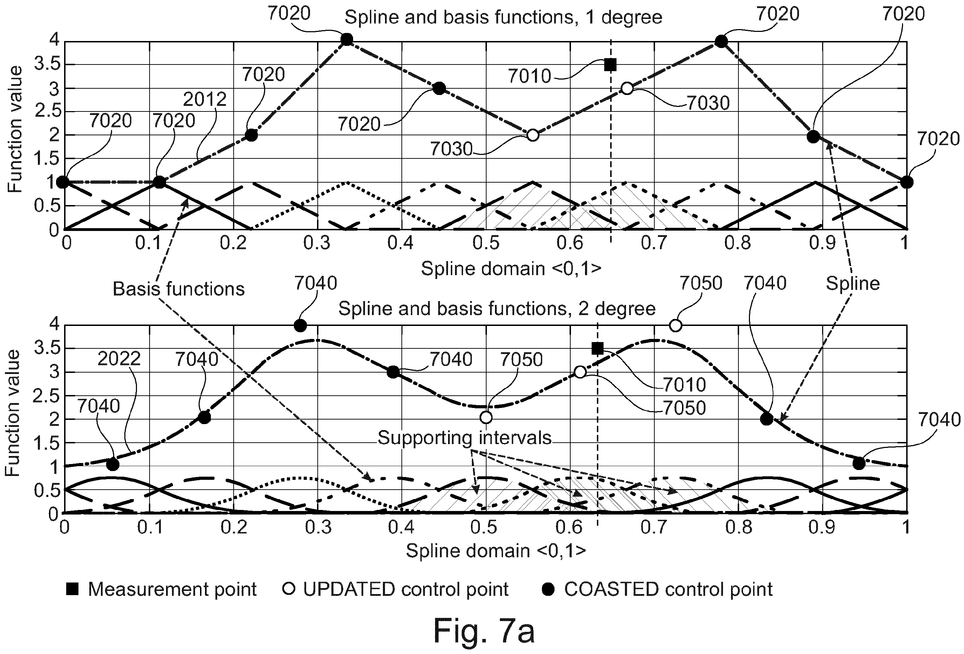

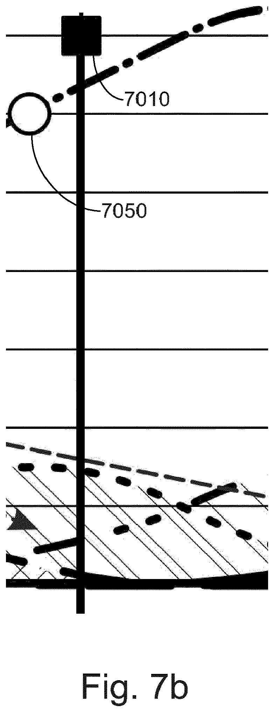

In the following, the determining of whether the current state of a control point is UPDATED or COASTED, is further described based on Figs. 6 and 7a and 7b. As outlined above, a single measurement is represented by a measurement point 6050 that may be mapped onto a cartesian coordinate system. The measurement points 6050 may be approximated by parametric curve 6060. Parametric curve 6060 may comprise footpoints, wherein one footpoint 6080 is visually indicated in Fig. 6, indicated by an X. A footpoint 6080 is a point that lies on parametric curve 6060 that approximates frees pace boundary 6040. The footpoints corresponding to the measurement points 6050 are identified. Then, a corresponding control point 6070 may be updated if a new measurement point 6050 is found in a control point's support interval corresponding to a footpoint 6080.

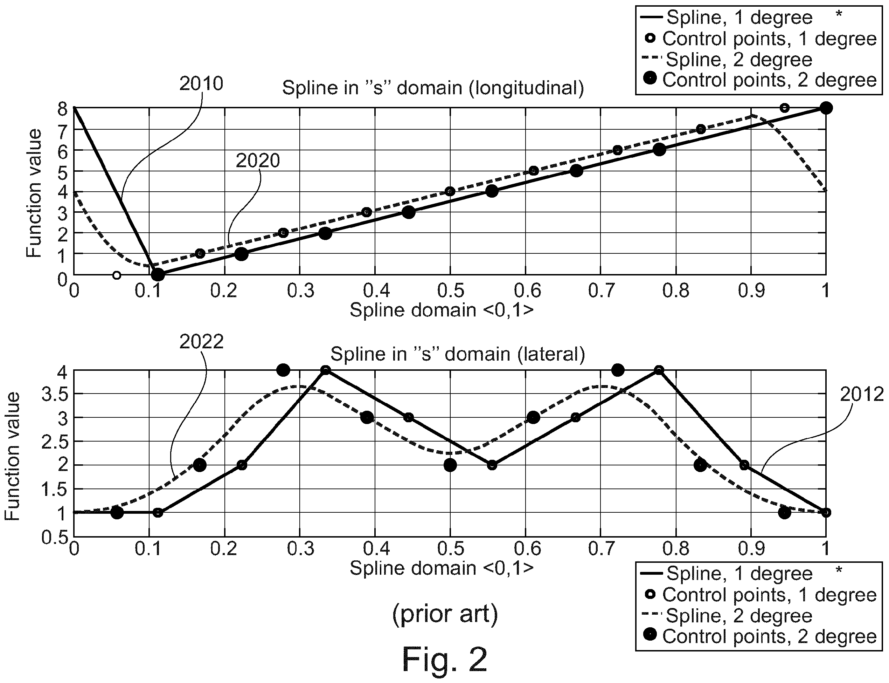

This process is further described with respect to Fig. 7a, which illustrates the lateral component 2012 of the first parametric curve of degree one 1010 and the lateral component 2022 of the second parametric curve of degree two 1020 according to Fig. 2.

Fig. 2 illustrates the longitudinal and lateral components of the parametric curves 1010, 1020 illustrated in Fig. 1, which was split accordingly. For illustration purposes, an offset is applied between the splines of degree one and degree two. The first diagram of Fig. 2 (top) depicts the longitudinal component 2010 of the first parametric curve of degree one 1010, which is illustrated by a solid line, and the longitudinal component 2020 of the second parametric curve of degree two 1020, which is illustrated by a dashed line. By contrast, the second diagram of Fig. 2 (bottom) depicts the lateral component 2012 of the first parametric curve of degree one 1010, which is illustrated by a solid line, and the lateral component 2022 of the second parametric curve of degree two 1020, which is illustrated by a dashed line. In general, a 2-dimensional curve like the parametric curves 1010 and 1020, may be created from two 1-dimensional curves like the parametric curves 2010 and 2012 or 2020 and 2020 respectively (by connecting them via their s-domain component), wherein the first 1-dimensional curve describes the longitudinal component, and the second 1-dimensional curve describes the lateral component. Both 1-D dimensional curves may be of any, but the same degree. Accordingly, the 2-D curve composed from the two 1-D curves may have the same degree as the corresponding 1-D curves. The corresponding control points are indicated by smaller and bigger black points, respectively. In both diagrams of Fig. 2, the x-axis represents the parametric curve domain in a range from 0 to 1, whereas the y-axis represents the function value of the parametric curve component.

Fig. 7a. illustrates the lateral component 2012 of the first parametric curve of degree one 1010 and the lateral component 2022 of the second parametric curve of degree two 1020 again with the applied offset for illustration purposes. However, this time, the corresponding basic functions 7100 underlying the fitted parametric curves 1010, 1020 are shown. Each of these basic functions 7100 span one supporting interval per control point 7020, 7030, 7040, 7050. According to a new measurement point 7010, a subset of the plurality of control points 7030, 7050 may be affected/updated, i.e., a state of the corresponding control points 7030, 7050 may be set to UPDATED. The remaining part of the plurality of control points 7020, 7040, which are not updated, may be marked as coasted control points 7020, 7040, i.e., a state of the corresponding control points 7020, 7040 may be set to COASTED. Whether a control point's state is set to updated or coasted may depend on whether the parametric curve domain value represented by the x-axis of the new measurement point 7010 intersects (i.e., lies within) the corresponding supporting interval of the respective control point.

With respect to the upper diagram of Fig. 7a, showing the lateral component 2012 of the first parametric curve of degree one 1010, once a new measurement point 7010 (indicated by the black square) is received, a subset of two control points 7030 (indicated by the white circles) of the plurality of control points 7030 of the lateral component 2012 is identified as updated. A control point 7030 is considered as updated if the parametric curve domain value according to the x-axis of the new measurement point 7010 intersects the supporting interval of the respective control point 7030. This is indicated by the black line crossing the new measurement point 7010 and the corresponding supporting interval. In this case, the two control points 7030 are identified. This is because the parametric curve domain value of the new measurement point 7010 intersects the supporting intervals of these two control points 7030. Therefore, the state of these two control points 7030 may be set to UPDATED. The remaining control points 7020 (indicated by black circles) are considered as not updated, because their respective supporting intervals are not intersected by the line that crosses the new measurement point 7010. Therefore, the state of these control points 7020 may be set to COASTED.

With respect to the lower diagram of Fig. 7a, showing the lateral component 2022 of the second parametric curve of degree two 1020, once a new measurement point 7010 (indicated by the black square) is received, a subset of three control points 7050 (indicated by the white circles) of the plurality of control points 7040, 7050 of the lateral component 2022 is identified as updated. A control point 7050 is considered as updated if the parametric curve domain value according to the x-axis of the new measurement point 7010 intersects the supporting interval of the respective control point. This is indicated by the black line crossing the new measurement point 7010 and the corresponding supporting interval. In this case, the three control points 7050 are identified. This is because the parametric curve domain value of the new measurement point 7010 intersects the supporting intervals of these three control points 7050. Therefore, the state of these three control points 7050 may be set to UPDATED. The remaining control points 7040 (indicated by black circles) are considered as not updated, because their respective supporting intervals are not intersected by the line that crosses the new measurement point 7010. Therefore, the state of these control points 7040 may be set to COASTED.

For illustration, Fig. 7b depicts a zoomed snapshot of the intersection between the new measurement point 7010 and the three supporting intervals of the corresponding control points 7050 as explained with respect to Fig. 7a.

When the status evaluation according to step 5300a is finished, the process moves on to step 5300b.

Control point adjustment

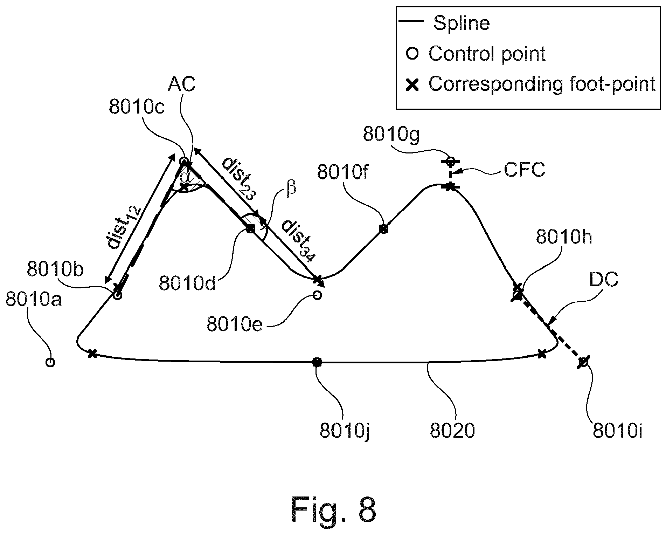

In the following, step 5300b, called "control point adjustment", is further described based on Fig. 8, which illustrates a shape hypothesis for adapting a distribution of a plurality of control points according to different shape complexity indicators.

Fig. 8 illustrates a parametric curve of degree two 8020 fitted to control points 8010a-j. The main goal of the control point adjustment is to achieve a behavior of having more control points 8010a-j around complex shapes of parametric curve 8020 and less control points 8020a-j around simpler shapes of parametric curve 8010. A simple shape can be equated to a straight line and a complex shape to a curve of the arc sine function. Having more control points 8010a-j around a complex shape may improve approximation quality. In addition, having a lower number of control points 8010a-j around simpler shapes, which may be described with less control points 8010a-j without significantly impacting approximation quality, may reduce the overall number of control points 8010a-j to be stored.

The shape complexity of a section/area of the parametric curve may be rated high if the parametric curve has, for example, tight corners or curves or other irregular shapes. This may be an indicator that the shape of the corresponding part of the free space boundary, and thus of the parametric curve, is complex. In such a case, adding a new control point in this complex area of the parametric curve may increase the approximation quality of the free space boundary by the parametric curve.

There are different ways of the control point adjustment: adding, removing, changing coordinates (i.e., moving) and merging. Adding means adding a new control point (or more) between two neighboring control points 8010a-c. Removing comprises removing an indicated control point 8010a-j. Changing coordinates comprises directly repositioning a control point 8010a-j by changing its respective coordinates. Merging comprises merging two neighboring control points 8010a-j into one new control point.

A position at which a new control point is added may be determined based on the positions of the two control points in between which the new control point is to be added. The position may also be determined based on more than two control points (e.g., based on a number of control points which are in a predefined vicinity). This enables the parametric curve to approximate the free space boundary more precisely. As a result, the approximation quality may be increased.

For example, the position of the new control point may be determined based on the mean of the positions of the two control points (e.g., the control point and the successor control point) in between which the new control point is to be added. This may allow for an optimized position of the new control point. This is because a position right in the middle of the two control points may allow the parametric curve to be fitted to the actual free space boundary in an appropriate way. As a result, the approximation quality may be increased.

In some cases, merging of two consecutive control points may be reasonable. This may be the case if the two control points are, for example, located closely next to each other, i.e., the distance between the two control points is less than a merging threshold. In some cases, merging of the two control points may be more advantageous than deleting one of the two control points. The reason for this may be that by merging the two control points the information value of both control points is essentially kept. As a result, the approximation quality of the parametric curve may be maintained or even increased, by at the same time reducing the amount of control points to be stored.

The merging operation may be implemented as a two-step approach, where the two consecutive points are removed, and a new control point is added with the position of the replacement control point being based on the positions of the two removed control points. This may for example be done by taking the mean of the positions. Accordingly, the merging operation may be implemented by using the existing add and remove operations to avoid unnecessary complexity, while maintaining the information value of both control points.

In case it is determined that a new control point is to be added within a first and a second control point and in case it is determined that the second control point is to be removed, changing the coordinates of the second control point may be beneficial. This is because otherwise, two operations, namely removing the second and adding a new control point would be required, which may have a negative effect on the computational complexity of the method. Therefore, instead of removing the second control point and adding a new control point at a corresponding position, the method may decide to move (i.e., re-position by e.g., directly changing the coordinates of) the second control point to the corresponding position.

Control point adjustment: shape complexity indicator

The decision whether to add, remove, reposition or merge control points 8010a-j is indicated by a shape complexity indicator. Additionally, or alternatively, the decision whether to add, remove, reposition or merge control points 8010a-j may be indicated if one or more of the conditions described with respect to the corresponding embodiments are met. The shape complexity indicator is a control point parameter, filtered in time. It reflects a parametric curve shape complexity affected by a control point. Its range is defined from -1.0 to 1.0. The lowest possible value (-1.0) indicates the lowest possible shape complexity and that a corresponding control point should be removed. By contrast, the highest possible value (1.0) indicates the highest possible complexity and that a new control point should be added. It is to be understood that other values of the complexity indicators or corresponding complexity bounds are also included by the present disclosure and that the disclosed values are merely examples.

In an example, the shape complexity indicator is defined as follows:

$$SC_i(k) = SC_i(k-1) \cdot \left(1.0 - filter_{factor}\right) + rawSC_i(k) \cdot filter\_factor$$

$$Equation\ (1)$$

where:

$k$ = an iteration counter 1, 2, 3, 4, ...
i = control point index
$SC_i(k)$ = the shape complexity in current iteration
$SC_i(k-1)$ = the shape complexity from the previous iteration
$rawSC_i(k)$ = raw (instant) value of the shape complexity in current cycle
$filter\_factor$ = filtration factor

The initial value of the shape complexity parameter for each control point is the same and equals zero *(SC(o) = 0.0)*. The present algorithm supports up to three different types of shape complexity indicators: distance complexity indicator (DC), corresponding footpoint complexity indicator (CFC) and angle complexity indicator (AC). In the following example, all three shape complexity indictors are used at once. However, the algorithm may also be applied by only using one or two of these indicators.

rawSC of equation (1) is defined as follows:

$$f(DC, CFC, AC) = \begin{cases} AC \cdot CFC + DC, & 0 < CFC \\ CFC + DC, & CFC \leq 0 \end{cases}$$

*Equation (2)*

$$rawSC = \min\left(\max(f(DC, CFC, AC), -1), 1\right)$$

*Equation (3)*

where:

DC = distance complexity indicator
CFC = corresponding footpoint complexity indicator
AC = angle complexity indicator

The raw value of shape complexity is calculated once for each iteration and is a function of three components, namely DC, CFC and AC.

While the implementation described by equation 1-3 is based on these three complexity indicators, it is the value of CFC indicator on which the shape complexity indicator $SC_i(k)$ mainly depends. As one can see from equation 2, for CFC values below or equal to zero, the AC indicator value is no longer part of the equation. This is because a CFC value below zero indicates that the parametric curve is (already) very well fitted to the corresponding control point (e.g., control point 8010f), which may be the case for parts of the parametric curve, which are of low complexity (e.g., a straight boundary line). Accordingly, the AC indicator may be neglected.

Should the CFC value be larger than zero, this may be an indication that the parametric curve is not (yet) well fitted to the corresponding control point (e.g., control point 8010g). This may be the case for parts of the parametric curve, which are of high complexity (e.g., a curve). Accordingly, the AC indicator considering the angle is of importance.

Control point adjustment: Distance complexity indicator

The distance complexity indicator is responsible for preventing too long parametric curve parts based on the distance between two neighboring (adjacent) control points (e.g., a control point and its successor or its predecessor). It is estimated as a scaled value from range *(DC$_{low}$, DC$_{high}$)* to range *(0, 1)* with saturation.

$$DC(x) = \begin{cases} 0, x \leq DC_{low} \\ (x - DC_{low}) \cdot \left(\dfrac{1}{DC_{high} - DC_{low}}\right), x \in (DC_{low}, DC_{high}) \\ 1, DC_{high} \leq x \end{cases}$$

*Equation (4)*

In an example, the lower distance complexity bound may be 0, the upper distance complexity bound may be 1, the lower distance limit may be defined as $DC_{low}$ and the upper distance limit may be defined as $DC_{high}$. Should the determined distance be smaller or equal to $DC_{low}$, the value of the distance complexity indicator would be set to 0. This may refer to the lowest distance complexity possible. Should the determined distance be larger than or equal to $DC_{high}$, the distance complexity indicator would be set to 1. This may refer to the highest distance complexity possible. Should the determined distance lie between the value of $DC_{low}$ and $DC_{high}$ (i.e., the determined distance is larger than $DC_{low}$ and smaller than $DC_{high}$), the value of the distance complexity indicator would be between the lower distance complexity bound (e.g., 0) and the upper distance complexity bound (e.g., 1).

Control point adjustment: Corresponding footpoint complexity indicator

The idea behind the corresponding footpoint complexity indicator is that a small distance between a control point and its corresponding footpoint indicates a sufficient number of control points for representing the local curvature of the parametric curve. It is estimated as scaled value from range *(CFC$_{low}$, CFC$_{high}$)* to range *(-1, 1)* with saturation.

$$CFC(x) = \begin{cases} -1, x \le CFC_{low} \\ (x - CFC_{low}) \cdot \left( \dfrac{2}{CFC_{high} - CFC_{low}} \right) - 1, x \in (CFC_{low}, CFC_{high}) \\ 1, CFC_{high} \le x \end{cases}$$

*Equation (5)*

$$CFC_i = \max(CFC_{i-1}, CFC_i)$$

*Equation (6)*

In an example, the lower footpoint distance complexity bound may be -1, the upper footpoint distance complexity bound may be 1, the lower footpoint distance limit may be defined as $CFC_{low}$ and the upper footpoint distance limit may be defined as $CFC_{high}$. Should the determined footpoint distance be smaller or equal to $CFC_{low}$, the value of the footpoint complexity indicator would be set to -1. This may refer to the lowest footpoint complexity possible. Should the determined footpoint distance be larger than or equal to $CFC_{high}$, the footpoint complexity indicator would be set to 1. This may refer to the highest footpoint complexity possible. Should the determined footpoint distance lie between the value of $CFC_{low}$ and $CFC_{high}$ (i.e., the determined footpoint distance is larger than $CFC_{low}$ and smaller than $CFC_{high}$), the value of the footpoint complexity indicator would be between the lower footpoint distance complexity bound (e.g., -1) and the upper footpoint distance complexity bound (e.g., 1).

Footpoint determination

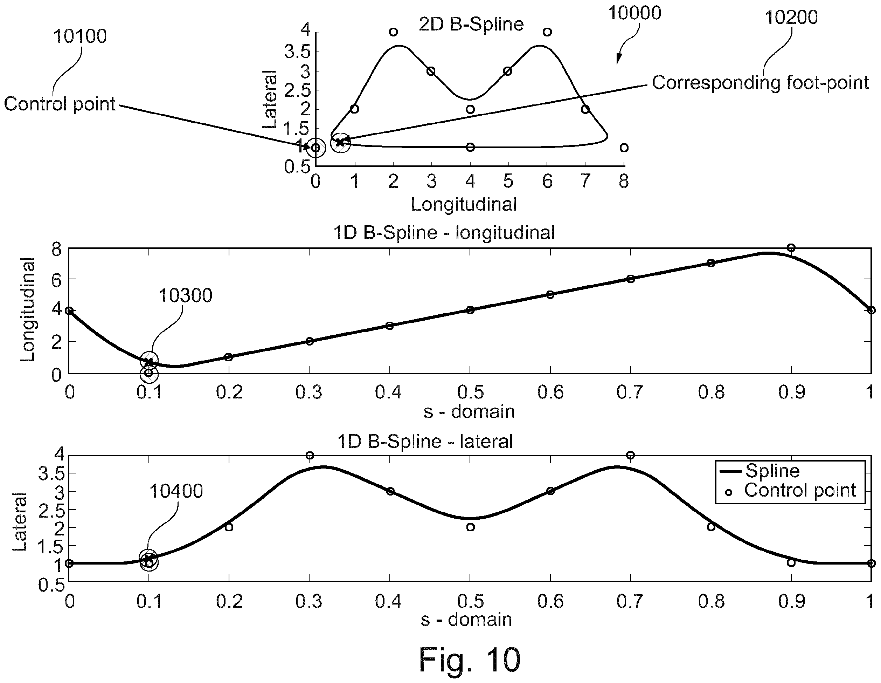

In the following, determining a footpoint corresponding to a control point as well as the corresponding footpoint distance is explained in detail with respect to Fig. 10. In general, one can describe a footpoint being a point of the parametric curve having a certain relation to its corresponding control point. For example, having the same s-domain value. The footpoint may be determined in different ways e.g., by reading the s-domain value from the control point. The s-domain value may then be used to calculate the footpoint position (longitudinal and lateral component).
As can be seen, Fig. 10 illustrates a 2D B-parametric curve comprising a plurality of control points. In addition, a first 1D B-parametric curve representing the longitudinal component of the 2D-parametric curve and a second 1D B-parametric curve representing the lateral component of the 2D-parametric curve are depicted. In this example, a corresponding footpoint 10200 for control point 10100 will be determined based on the s-domain values of the control point 10100. However, other criteria such as minimal distance or orthogonality may be possible, too.
The S-domain value of the control point 10100 is *0.1*. According to the first 1D B-parametric curve, the longitudinal value 10300 of the control point 10100 is *0*. In order to determine the longitudinal value 10300 of the corresponding footpoint 10200, the longitudinal value 10300 of the first 1D B-parametric curve is determined for the s-domain value = *0.1,* which may ~*0.7*. The same procedure is repeated for the lateral value 10400. While the lateral value 10400 of the control point is *1*, the lateral value 10400 of the second 1D- B-parametric curve for the s-domain value =*0.1* may be ~*1.1*. As a result, the corresponding footpoint 10200 may have the coordinates (*0.7,1.1*).
Therefore, the footpoint distance (e.g., the (Euclidean) distance between the control point 10100 and its corresponding footpoint 10200) may be ~*0.71*.

Control point adjustment: Angle complexity indicator

The angle complexity indicator is estimated as a scaled value from range *(AC$_{low,}$ AC$_{high}$)* to range *(0, 1)* with saturation.

$$AC(x) = \begin{cases} 0, x \le AC_{low} \\ (x - AC_{low}) \cdot \left( \dfrac{1}{AC_{high} - AC_{low}} \right), x \in (AC_{low}, AC_{high}) \\ 1, AC_{high} \le x \end{cases}$$

*Equation (7)*

In an example, the lower angle complexity bound may be o, the upper angle complexity bound may be 1, the lower angle limit may be defined as $AC_{low}$ and the upper angle limit may be defined as $AC_{high}$. Should the determined angle be smaller or equal to $AC_{low}$, the value of the angle complexity indicator would be set to o. This may refer to the lowest angle complexity possible. Should the determined angle be larger than or equal to $AC_{high}$, the angle complexity indicator would be set to 1. This may refer to the highest distance complexity possible. Should the determined angle lie between the value of $AC_{low}$ and $AC_{high}$ (i.e., the determined distance is larger than $AC_{low}$ and smaller than $AC_{high}$), the value of the angle complexity indicator would be between the lower angle complexity bound (e.g., o) and the upper angle complexity bound (e.g., 1).

Control point adjustment: removal of control point

A control point may be removed if the following condition is met:

$$SC_i(k) < th_{removal}$$

where

$$th_{removal} \in \langle -1, 1 \rangle$$

*Equation (8)*

and where $th_{removal}$ is an adjustable threshold value.

In more detail, a control point 8010a-j may be removed from the set of control points 8010a-j if a part of the parametric curve affected by a control point 8010a-j is considered as being smooth (i.e., having a low rated shape complexity). Such a low rated shape complexity may indicate that the corresponding area is already covered with enough or even too many control points 8010a-j. Accordingly, the control point 8010a-j under evaluation may be removed from the set of control points 8010a-j without reducing the approximation quality of the corresponding parametric curve 8020.

It is to be understood that equations 1 to 7 refer to one possible implementation of how to determine whether the shape complexity of the parametric curve in the area affected by the evaluated control point is rated low (i.e, $SC_i(k) < th_{removal}$).

Accordingly, the shape complexity may also be determined using only one or two of the complexity indicators (DC, CFC, AC). It may also be possible to determine the shape complexity by using a more general calculation concept of the three indicators. Corresponding examples are described in the following. It is to be understood that aspects of the following examples may also be combined.

Example with detailed complexity indicator calculation

An example in which a control point is removed using the equations 1-7 is given in the following with respect to Fig. 8. It is assumed that control point 8010d is evaluated, *filter_factor=1* and k=1. For simplification, no units are included in this example. Accordingly, equation 1 is reduced to $SC_{8010d}(1) = rawSC_{8010d}(1)$.

In a first step, the value of the CFC indicator may be determined. It is assumed that $CFC_{low} = 0.5$ and $CFC_{high} = 1$.

As one can see, control point 8010d and the corresponding footpoint have the same position. Accordingly, a footpoint distance x between both positions would be *0*. As a result, the value of the CFC indicator would be -1.

In a second step, the value of the DC indicator is determined. It is assumed that $DC_{low} = 1.5$ and $DC_{high} = 3$ and that the distance x (i.e., $dist_{34}$) between the successor control point 8oioe and the control point 8010d is 1.4. As a result, the value of the DC indicator would be o.

For equation 2 follows $f(0, -1) = -1 + 0 = -1$.

For equation 3 follows $rawSC = min(max(-1, -1), 1) = -1$.

As a result, the shape complexity indicator for control point 8010d would be $SC_{8010d}(1) = -1$. For a $th_{removal} = -0.9$ the shape complexity indicator for control point 8010d would be smaller than the removal threshold and could be removed.

Further general examples

In a further example, the rating of the shape complexity of parametric curve 8020 affected by a control point under evaluation may be rated low if an angle between a predecessor control point of the control point under evaluation, the control point under evaluation itself and the successor control point is within a specified removal interval and/or a distance between the predecessor control point and the successor control point is less than (or equal to) a control point removal threshold and/or a distance between the control point under evaluation and a corresponding footpoint is less than a control-point-to-footpoint threshold. These three consecutive control points may be referred to as a triplet. Out of such a triplet, only the middle control point may be removed. The removal interval may be specified as a range of angle values between a first angle value (lower limit) and a second angle value (upper limit). Alternatively, the removal interval may be specified as a combination of a mean angle value and a corresponding variance angle value. Instead of determining that the angle is within the specified removal interval, it may be possible to determine whether the angle is sufficiently close to a reference angle value. This may be done by determining the absolute value of the difference between the determined angle and the refence angle and determining whether the difference is smaller than a threshold.

The shape complexity indicator may be determined based on the angle, corresponding footpoint, and/or the distance. A shape complexity rating may be rated low if the shape complexity indicator is below a low shape complexity threshold (i.e., $SC_i(k) < th_{removal}$). For example, a shape complexity indicator may have values between -1.0 and 1.0, wherein -1.0 indicates the lowest shape complexity possible and 1.0 the highest shape complexity possible. In such an example, the low complexity threshold may be set to -0.9. Accordingly, the shape complexity rating of a control point 8010a-j is rated low if the shape complexity indicator is less than or equal to -0.9. In a first example, the determined angle may be right in the middle of the specified removal interval. In a second example, the determined angle may be just within the specified removal interval (i.e., at a limit of the interval). Accordingly, the shape complexity indicator of the first example may be lower than the local complexity indicator of the second example.

In the example illustrated in Fig. 8, it is assumed that control point 8oiod is presently evaluated. The corresponding triplet thus comprises predecessor control point 8010c, control point 8oiod under evaluation and successor control point 8oioe. In order to determine whether the rating of the shape complexity of parametric curve 8020 around control point 8oiod is rated low, in a first step, the angle $\beta$ between the control points 8010c, 8010d and 8oioe is determined. In this example, the angle $\beta$ may have the value of 179 degree. Furthermore, the removal interval may be specified as [170 degree; 190 degree]. Accordingly, it may be determined that the value of 179 degree of the angle $\beta$ is within the specified removal interval of [170 degree; 190 degree]. Alternatively, the removal interval may be specified as combination of a mean angle value of 180 degree and a variance angle value of +/- 10 degree. Alternatively, it may be determined whether the angle $\beta$ is sufficiently close to a reference angle value (e.g., 180 degree). This may for example be done by determining the absolute value of the difference between the determined angle $\beta$ and the refence angle and determining whether the difference is less than a threshold. In this example, the reference angle value may be 180 and the threshold may be 10 degree. The absolute value of the difference between the angle $\beta$ and the refence angle 180 may be 1 degree. Accordingly, the difference is less than the threshold of 10 degree. As a result, it is determined that the angle $\beta$ is sufficiently close to the reference angle. In this case, control point 8010 may be added to a removal list.

In a next step, a distance between the predecessor control point 8010c and the successor control point 8oioe may be determined. This may be done by calculating the distance based on the positions of the predecessor control point 8010c and the successor control point 8oioe. In the example shown, the distance is determined by calculating the distance between control point 8010c and control point 8oiod, denoted as $dist_{23}$, by calculating the distance between control point 8oiod and control point 8oioe, denoted as $dist_{34}$, and by adding the two distances $dist_{23}$ and $dist_{34}$. In some cases, the distance may also be directly determined by calculating the distance between control point 8010c and control point 8oioe as distance $dist_{24}$ (not shown in Fig. 8). The distance between two control points 8010a-j may be calculated using the Euclidean distance. In the shown example, the positions of control point 8010c, 8010d and 8oioe in cartesian coordinates may be (2,4), (3,3) and (4,2). Accordingly, the calculation of distances may result in $dist_{23} = 1.4$, $dist_{34} = 1.4$ or $dist_{24} = 2.8$, with $dist_{23} + dist_{34} = dist_{24}$. Accordingly, in an example in which the control point removal threshold equals 3, the distance between the control point 8010c and the control point 8oioe is equal to or less than the control point removal threshold. As a result, control point 8010d may be removed from the set of the control points 8010a-j of parametric curve 8020.

Control point adjustment: adding a new control point

A control point may be added if the following condition is met:

$$th_{addition} < SC_i(k)$$

where

$$th_{addition} \in \langle -1, 1 \rangle$$

*Equation (9)*

and where $th_{addition}$ is an adjustable threshold value.

In more detail, a control point 8010a-j may be added to the set of control points 8010a-j if a part of parametric curve 8020 affected by (i.e., around) a control point under evaluation is considered as having a high shape complexity (i.e., high rated in terms of shape complexity). Such a high rated shape complexity may indicate that the corresponding part of parametric curve 8020 is not covered by sufficient control points 8010a-j. Accordingly, a new control point 8010a-j may be added to the set of control points 8010a-j to increase the approximation quality provided by parametric curve 8020.

It is to be understood that equations 1 to 7 refer to one possible implementation of how to determine whether the shape complexity of the parametric curve in the area affected by the evaluated control point is rated high (i.e., $th_{addition} < SC_i(k)$).

Accordingly, the shape complexity may also be determined using only one or two of the complexity indicators (DC, CFC, AC). Corresponding and further examples are described in the following. It is to be understood that aspects of the following examples may also be combined to determine the shape complexity indicator.

Example with detailed complexity indicator calculation

An example in which a control point is added using the equations 1-7 is given in the following with respect to Fig. 8. It is assumed that control point 8010c is evaluated, *filter_factor=1* and *k*=1. For simplification, no units are included in this example. Accordingly, equation 1 is reduced to $SC_{8010c}(1) = rawSC_{8010c}(1)$.

In a first step, the value of the CFC indicator may be determined. It is assumed that $CFC_{low} = 0.5$ and $CFC_{high} = 1$.

As one can see, the position of the control point 8010c and the corresponding footpoint are different. Accordingly, a foot point distance x between both positions may be *1*. As a result, the value of the CFC indicator would be +1.

In a second step, the value of the DC indicator is determined. It is assumed that $DC_{low} = 1$ and $DC_{high}$ 2 and that the distance x (i.e., $dist_{23}$) between the control point 8010c and the successor control point 8010d is 2. As a result, the value of the DC indicator would be 1.

As the value of the CFC indicator is larger than *0*, in a third step, the value of the AC indicator is determined. In this example, it is assumed that the corresponding AC indicator determination would result in the value of the AC indicator being 1.

For equation 2 follows $f(1,1,1) = 1·1+1 = 2$.

For equation 3 follows $rawSC = \min(\max(2, -1), 1) = 1$.

As a result, the shape complexity indicator for control point 8010c would be $SC_{8010c}(1) = 1$. For a $th_{addition} = 0.9$ the shape complexity indicator for control point 8010c would be larger than the addition threshold and a new control point would be added.

Further general examples

In an example, a rating of a shape complexity of parametric curve 8020 around a control point under evaluation may be rated high if an angle between a predecessor control point of the control point under evaluation, the control point under evaluation itself and the successor control point of the control point under evaluation is outside of a specified addition interval and/or a distance between the predecessor control point and the control point and/or a distance between the control point and the successor control point is above a control point addition threshold and/or a distance between the control point under evaluation and a corresponding footpoint is larger than a control-point-to-footpoint threshold. These three consecutive control points may be referred to as a triplet. In such a triplet, a new control point may be added between the predecessor control point and the control point under evaluation and/or between the control point under evaluation and the successor control point. A position of the new control point, which is to be added, may be determined based on a position of the predecessor control point and a position of the control point or the position of the control point and a position of the successor control point.

The addition interval may be specified as a range of angle values between a first angle value (lower limit) and a second angle value (upper limit). Alternatively, the addition interval may be specified as a combination of a mean angle value and a corresponding variance angle value. Instead of determining that the angle is outside the specified addition interval, it may be possible to determine whether the angle is sufficiently far away from a reference angle value. This may for example be done, by determining the absolute value of the difference between the determined angle and the refence angle and determining whether the difference is larger than a threshold.

In some cases, a shape complexity indicator may be determined based on the angle and/or the distance. The shape complexity is rated high if the shape complexity indicator is above a high complexity threshold. For example, a shape complexity indicator may have values between -1. and 1.0, wherein -1.0 indicates the lowest local complexity possible and 1.0 the highest local complexity possible. In such an example, the high complexity threshold may be set to +0.9. Accordingly, the shape complexity rating of a control point is rated high if the shape complexity indicator is larger than or equal to 0.9. The value of the indicator may depend on a difference between the determined angle and one of the limit values of the specified addition interval. In a first example, the difference between the determined angle and the limit value of the specified addition interval may be 30 degree. In a second example, the difference between the determined angle and the limit value of the specified addition interval may be 20 degree. Accordingly, the shape complexity indicator of the first example may be higher than the local complexity indicator of the second example.

In the example shown in Fig. 8, it is assumed that control point 8010c is under evaluation. The corresponding triplet then comprises the predecessor control point 8010b, the control point under evaluation 8010c and the successor control point 8010d. In order to determine whether the rating of the shape complexity of parametric curve 8020 around control point 8010c is rated high, in a first step, the angle $\alpha$ between the control points 8010b, 8010c and 8010d is determined. In this example, the angle $\alpha$ may have the value of 75 degree. Furthermore, the addition interval may be specified as [170 degree; 190 degree]. Accordingly, it may be determined that the value of 75 degree of the angle $\alpha$ is outside the specified addition interval of [170 degree; 190 degree]. Alternatively, the addition interval may be specified as combination of a mean angle value of 180 degree and a variance angle value of +/- 10 degree. Alternatively, it may be determined whether the angle $\alpha$ is sufficiently far away from a reference angle value (e.g., 180 degree). This may for example be done, by determining the absolute value of the difference between the determined angle and the refence angle and determining whether the difference is larger than a threshold. In this example, the reference angle value may be 180 and the threshold may be 10 degree. The absolute value of the difference between the angle $\alpha$ and the refence angle may be 105 degree. Accordingly, the difference may be larger than the threshold of 10 degree. As a result, it is determined that the angle $\alpha$ is sufficiently far away.

In a second step, it may be determined whether a new control point is added between the control points 8010b and 8010c and/or between the control points 8010c and 8010d. Therefore, a first distance between the predecessor control point 8010b and the control point 8010c and a second distance between the control point 7010c and the successor control point 8010d is determined. This may for example be done by calculating the first/second distance based on the positions of the predecessor control point 8010b and the control point under evaluation 8010c and/or the control point under evaluation 8010c and the successor control point 8010d. In the example shown, the first distance is determined by calculating the distance between control point 8010b and control point under evaluation 8010c, denoted as $dist_{12}$, as well as the second distance between control point 8010c and control point 8010d, denoted as $dist_{23}$. The distance between two control points may be calculated using the Euclidean distance. In the shown example, the positions of control point 8010b, 8010c and 8010d in cartesian coordinates may be (1,2), (2,4) and (3,3). Accordingly, the calculation of the distances may result in $dist_{12}$ = 2.2 and $dist_{23}$ = 1.4. Accordingly, in an example in which the control point addition threshold equals 2, the distance $dist_{12}$ between the control point 8010b and the control point 8010c is equal to or larger than the control point addition threshold. Therefore, a new control point may be added between the control points 8010b and 8010c. The distance $dist_{23}$ between the control points 8010c and 8010d, however, is less than the control point addition threshold. Therefore, no new control point is added between the control points 8010c and 8010d.

A position of the new control point, which is to be added, may be determined based on the position of the two control points in between which the new control point is to be added. The position may be determined using the mean of the position of the two control points in between which the new control point is to be added. In the example illustrated with respect to Fig. 8, it may have been determined that a new control point is to be added between the control points 8010b and 8010c. In this example, the positions of the control point 8010b and control point 8010c are (1,2) and (2,4). Determining the position of the new control point based on the mean of the positions of the two control points 8010b and 8010c may result in the position of the new control point being (1.5, 3).

Control point adjustment: merging control points or changing coordinates

If two control points are close to each other, i.e., the distance between them is below a distance threshold, the two control points may be merged. For example, the distance threshold may be set to 1 and the distance $dist_{23}$ between control points 8010c and 8010d is 0.8, then, the control points 8010c and 8010d may be merged.

Changing coordinates comprises directly repositioning a control point. This may refer to moving the control point to another section of the spline.

After having performed the control point adjustment according to step 5300, the algorithm may move to step 5400.

Further cycle

In the following, step 5400, called "further cycle?", is further described. If the vehicle 3010 is moving, new measurements by means of the sensors of the vehicle 3010 may be conducted constantly due to for example a changing environment. Hence, new measurements will be received that require a update of spline. Therefore, when it is determined that the vehicle is moving, it may be decided to move to step 5100 and to start a further cycle of the algorithm.

When, for example, the engine of the vehicle 3010 or the corresponding vehicle assistance system executing the algorithm 5000 is turned off, the algorithm may move to step 5500. This may also be the case when the vehicle 3010 has stopped moving and no further measurements are conducted.

Suspend

In the following, step 5500, called "suspend", is further described. If the algorithm has reached step 5500, it may suspend execution. However, execution may be resumed if, for example, the engine of vehicle 3010 or the corresponding vehicle assistance system executing the algorithm 5000 is turned on again. In this case, the algorithm may move to step 5100 to start a further cycle.

Improved parametric curve

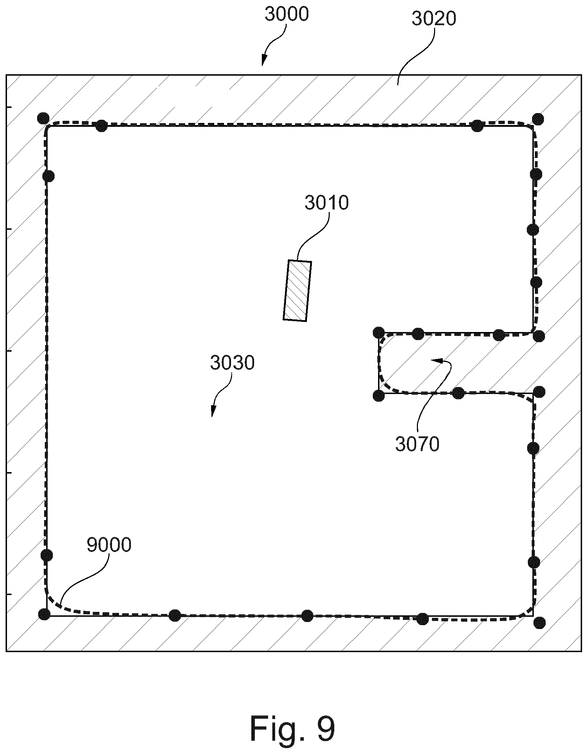

Fig. 9 shows a parametric curve 9000 that has been optimized according to the algorithm of the present invention. Assuming that parametric curve 4050 has been used as starting point for the optimization, the distribution of the plurality of control points (indicated by the black circles) has been adjusted such that a high approximation quality is achieved, but on the other hand only a small number of control points is used. While parametric curve 9000 only requires 23 control points, parametric curve 4050 is based on 50 control points. However, despite the reduced amount of control points, the approximation quality of parametric curve 9000 is essentially the same as provided by parametric curve 4050.

As can be seen, the distribution of the control points has been optimized such that only a small number of control points is used in areas where the complexity is low. For example, on the top and the left side, where parametric curve 9000 essentially forms a straight line, a significantly reduced number of control points is set by at the same time providing essentially the same approximation quality as parametric curve 4050 does.

By contrast, in the area around the inward indentation 3070 of environment 3000, an increased number of control points is used to maintain a high approximation quality. Hence, the algorithm according to the invention uses an increased number of control points in areas with high complexity, whereas the amount of control points in areas with low complexity is reduced. This leads to an efficient usage of control points.

As a result, a movement instruction affecting a function of the vehicle assistance system may be efficiently determined. A movement instruction may be a corresponding path planning result based on the free space, which is approximated by the parametric curve. As the approximation quality and/or the memory consumption of the parametric curve is improved, the corresponding movement instruction may be generated more efficiently (i.e., more precisely and/or faster). Accordingly, a corresponding vehicle assistance system receiving the movement instruction may move the vehicle according to the movement instruction (e.g., affect the movement of the vehicle). In addition or as an alternative, a parking aid system may issue the vehicle to park (i.e., move) into a corresponding parking slot based on the generated movement instruction without a collision. However, the parametric curve may just be displayed to a user for providing assistance for maneuvering the vehicle.

The algorithm according to the present invention may be implemented in terms of a computer program which may be executed on any suitable data processing device comprising means (e.g., a memory and one or more processors operatively coupled to the memory) being configured accordingly. The computer program may be stored as computer-executable instructions on a non-transitory computer-readable medium.

Embodiments of the present disclosure may be realized in any of various forms. For example, in some embodiments, the present invention may be realized as a computer-implemented method, a computer-readable memory medium, or a computer system.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a computing device may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. In particular, with reference to the appended claims, features from dependent claims may be combined with those of the independent claims and features from respective independent claims may be combined in any appropriate manner and not merely in the specific combinations enumerated in the appended claims.

## Claims

1. A computer-implemented method (5000) in a vehicle assistance system for determining a free space boundary (3040) of a physical environment (3000) surrounding a vehicle (3010), the method comprising the steps of:

    a. obtaining (5200) a parametric curve (3050) approximating spatial information representing the free space boundary (3040), wherein the parametric curve (3050) is defined by a plurality of control points (3060);
    b. determining a shape complexity indicator for a control point of the plurality of control points (3060), the shape complexity indicator indicating a shape complexity of a section of the parametric curve (3050) affected by the control point (3060); and
    c. modifying (5300) the section of the parametric curve (3050) affected by the control point (3060) based on the shape complexity indicator.

2. The method of the preceding claim, wherein modifying the section of the parametric curve (3050) affected by the control point (3060) comprises at least one of:

    increasing an amount of control points (3060) in the section of the parametric curve (3050) affected by the control point (3060) if the shape complexity indicator indicates a high shape complexity;
    decreasing the amount of control points (3060) in the section of the parametric curve (3050) affected by the control point (3060) if the shape complexity indicator indicates a low shape complexity.

3. The method of the preceding claim, wherein increasing the amount of control points (3060) comprises at least one of:

    adding a new control point (3060) in the section of the parametric curve (3050) affected by the control point (3060);
    moving a control point of the plurality of control points (3060) from another section of the parametric curve (3050) to the section of the parametric curve (3050) affected by the control point (3060); and/or

    wherein decreasing the amount of control points (3060) comprises at least one of:

    removing the control point (3060) from the plurality of control points (3060);
    moving the control point (3060) from the section of the parametric curve (3050) to another section of the parametric curve (3050);
    merging the control point (3060) with another control point of the plurality of control points (3060) within the section of the parametric curve (3050).

4. The method of the preceding claim, wherein adding the control point (3060) further comprises:
    adding the new control point (3060) between the control point (3060) and an adjacent control point (3060).

5. The method of any one of the preceding claims, wherein determining the shape complexity indicator for the control point (3060) according to step b. comprises at least one of:

    determining a distance complexity indicator comprising determining a control point distance between the control point (3060) and a successor control point (3060);
    determining a footpoint complexity indicator comprising determining a footpoint (10200) corresponding to the control point (3060), and determining a footpoint distance between the footpoint (10200) and the control point (3060);

determining an angle complexity indicator comprising determining an angle between the control point (3060), the successor control point (3060) and a predecessor control point (3060).

6. The method of the preceding claim, wherein determining the distance complexity indicator further comprises at least one of:

setting the distance complexity indicator to a value according to a lower distance bound if the control point distance is lower than or equal to a lower distance limit, wherein the value according to the lower distance bound indicates a lowest distance shape complexity;
setting the distance complexity indicator to a value according to an upper distance bound if the control point distance is greater than or equal to an upper distance limit, wherein the value according to the upper distance bound indicates a highest distance shape complexity;
setting the distance complexity indicator to a value lying between the upper distance bound and the lower distance bound if the control point distance is greater than the lower distance limit and smaller than the upper distance limit, wherein the value lying between the upper distance bound and the lower distance bound indicates an intermediate distance shape complexity.

7. The method of any one of the preceding claims 5 to 6, wherein determining the footpoint complexity indicator further comprises at least one of:

setting the footpoint complexity indicator to a value according to a lower footpoint distance bound if the footpoint distance is lower than or equal to a lower footpoint distance limit, wherein the value according to the lower footpoint distance bound indicates a lowest footpoint shape complexity;
setting the footpoint complexity indicator to a value according to an upper footpoint distance bound if the footpoint distance is greater than or equal to an upper footpoint distance limit, wherein the value according to the upper footpoint distance bound indicates a highest footpoint shape complexity;
setting the footpoint complexity indicator to a value lying between the upper footpoint distance bound and the lower footpoint distance bound if the footpoint distance is greater than the lower footpoint distance limit and smaller than the upper footpoint distance limit, wherein the value lying between the upper footpoint distance bound and the lower footpoint distance bound indicates an intermediate footpoint shape complexity.

8. The method of any one of the preceding claims 5 to 7, wherein determining the angle complexity indicator further comprises at least one of:

setting the angle complexity indicator to a value according to a lower angle bound if the angle is lower than or equal to a lower angle limit, wherein the value according to the lower angle bound indicates a lowest angle shape complexity;
setting the angle complexity indicator to a value according to an upper angle bound if the angle is greater than or equal to an upper angle limit, wherein the value according to the upper angle bound indicates a highest angle shape complexity;
setting the angle complexity indicator to a value lying between the upper angle bound and the lower angle bound if the angle is greater than the lower angle limit and smaller than the upper angle limit, wherein the value lying between the upper angle bound and the lower angle bound indicates an intermediate angle shape complexity.

9. The method of claims 1 to 8, wherein the method comprises:
repeating, for each control point of the plurality of control points (3060), steps b. and c.

10. The method of any one of the preceding claims, wherein the method further comprises:

determining, prior to step b., a status indicator based on measurement data, indicating whether the control point (3060) is required for defining the parametric curve (3050) to represent the free space boundary (3040); and removing the control point (3060) and skipping steps b. and c if the status indicator indicates that the control point (3060) is not required; or
maintaining the control point (3060).

11. The method of any one of the preceding claims, wherein obtaining the parametric curve (3050) according to step a. comprises:

determining the parametric curve (3050) based on sensor data of at least one sensor of the vehicle (3010); or receiving the parametric curve (3050) from a memory, which is operably connected to the vehicle assistance system.

12. The method of any one of the preceding claims, wherein the method further comprises:
determining an operating instruction based on the parametric curve (3050) affecting a function of the vehicle assistance system, wherein the function preferably comprises at least one of:

- displaying the parametric curve (3050) on a display of the vehicle (3010);
- conducting a vehicle path planning;
- triggering a warning;
- affecting control of the vehicle (3010) during a parking process.

13. An apparatus comprising means configured to perform the method of any of the claims 1 to 12.

14. A computer program comprising instructions, which when executed by a computing system, causing the computing system to perform the method of any of the claims 1 to 12.

15. A vehicle (3010) comprising an apparatus according to claim 13.

(prior art)

Fig. 1

(prior art)

Fig. 2

(prior art)

Fig. 3

(prior art)

Fig. 4

Fig. 5

Fig. 6

Fig. 7a

Fig. 7b

Fig. 8

Fig. 9

Fig. 10

EP 4 310 797 A1

Europäisches
Patentamt

European
Patent Office

Office européen
des brevets

# EUROPEAN SEARCH REPORT

**Application Number**

EP 22 18 6229

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OUIDDAD LABBANI I ET AL: "Free Form based active contours for image segmentation and free space perception", ARXIV.ORG, CORNELL UNIVERSITY LIBRARY, ITHACA, NY, 15 June 2016 (2016-06-15), XP080708636, * the whole document * | 1-6,9, 11-15 | INV. G06V20/58 G06T11/20 |
| Y,D | SCHREIER MATTHIAS ET AL: "Compact Representation of Dynamic Driving Environments for ADAS by Parametric Free Space and Dynamic Object Maps", IEEE TRANSACTIONS ON INTELLIGENT TRANSPORTATION SYSTEMS, IEEE, PISCATAWAY, NJ, USA, vol. 17, no. 2, February 2016 (2016-02), pages 367-384, XP011597408, ISSN: 1524-9050, DOI: 10.1109/TITS.2015.2472965 [retrieved on 2016-01-29] * figures 2, 10(h) * * Sect. V * | 1-5,7-15 | |
| Y | CN 112 750 139 A (TENCENT TECH SHENZHEN CO LTD) 4 May 2021 (2021-05-04) * paragraphs [0002], [0003], [0037] * * paragraphs [0058], [0059], [0061], [0062] * * figures 3,9A,9C * | 1-5,7-15 | TECHNICAL FIELDS SEARCHED (IPC) G06V G06T |
| A,D | YANG H ET AL: "Control point adjustment for B-spline curve approximation", COMPUTER-AIDED DESIGN, ELSEVIER PUBLISHERS BV., BARKING, GB, vol. 36, no. 7, June 2004 (2004-06), pages 639-652, XP004502046, ISSN: 0010-4485, DOI: 10.1016/S0010-4485(03)00140-4 * the whole document * | 1-15 | |

The present search report has been drawn up for all claims

| Place of search | Date of completion of the search | Examiner |
|---|---|---|
| The Hague | 22 December 2022 | Hermes, Lothar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 6229

This annex lists the patent family members relating to the patent documents cited in the above-mentioned European search report.
The members are as contained in the European Patent Office EDP file on
The European Patent Office is in no way liable for these particulars which are merely given for the purpose of information.

22-12-2022

| Patent document cited in search report | | Publication date | Patent family member(s) | Publication date |
|---|---|---|---|---|
| CN 112750139 | A | 04-05-2021 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. STEYER ; G. TANZMEISTER ; D. WOLLHERR.** Grid-Based Environment Estimation Using Evidential Mapping and Particle Tracking. *IEEE Transactions on Intelligent Vehicles,* September 2018, vol. 3 (3), 384-396
- **G. KRAETZSCHMAR ; G. P. GASSULL ; K. UHL.** Probabilistic Quadtreesfor Variable-Resolution Mapping of Large Environments,. *Proc. Of the 5th IFAC/EURON Symposium on Intelligent Autonomous Vehicles, Lisbon, Portugal,* July 2004
- **M. DARMS ; M. KOMAR ; S. LÜKE.** Map based Road Boundary Estimation. *Proc. of the IEEE Intelligent Vehicles Symposium, San Diego, California, USA,* June 2010
- **T.-N. NGUYEN ; M.-M. MEINECKE ; M. TORNOW ; B. MICHAELIS.** Optimized Grid-Based Environment Perception in Advanced Driver Assistance Systems. *Proc. of the IEEE Intelligent Vehicles Symposium, Xi'an, Shaanxi, China,* June 2009, 425-430
- **M. SCHREIER ; V. WILLERT ; J. ADAMY.** From grid maps to Parametric Free Space maps - A highly compact, generic environment representation for ADAS. *2013 IEEE Intelligent Vehicles Symposium (IV),* 2013, 938-944
- **YANG et al.** Control Point Adjustment for B-Spline Curve Approximation. *Computer-Aided Design,* 2004, vol. 36, 639-652
- **M. SCHREIER ; V. WILLERT ; J. ADAMY.** From grid maps to Parametric Free Space maps - A highly compact, generic environment representation for ADAS. *2013 IEEE Intelligent Vehicles Symposium (IV),* 2013, 938-944